# EUROPÄISCHE PATENTANMELDUNG

(11) **EP 3 339 631 A1**
(43) Veröffentlichungstag der Anmeldung: **27.06.2018**
(21) Anmeldenummer: 16206284.8
(22) Anmeldetag: 22.12.2016
(51) Int. Cl.: F03D 1/02, F03D 13/20

(54) **WINDENERGIEANLAGENSYSTEM**

(71) Anmelder: Skywind GmbH, 25813 Husum (DE)
(72) Erfinder: Richert, Frank, 25813 Husum (DE)
(74) Vertreter: Winter, Brandl, Fürniss, Hübner, Röss, Kaiser, Polte - Partnerschaft mbB

(57) **Zusammenfassung**

Die Erfindung betrifft ein Windenergieanlagensystem (1) mit auf einer gemeinsamen Tragstruktur angeordneten Windenergieanlagen zur Umwandlung von Windenergie in elektrische Energie, mit einem Zentralturm (2) und einem ersten und zweiten Tragast (6, 7) sowie einer Traverse (9), die an dem äußeren Ende der Tragäste angeordnet ist und diese verbindet, einer ersten Windenergieanlage (10), die an einem ersten Endbereich (11) der Traverse mittels einer ersten Verstelleinrichtung (16) drehbar angeordnet ist, einer zweiten Windenergieanlage (20), die an einem zweiten Endbereich (21) der Traverse mittels einer zweiten Verstelleinrichtung (26) drehbar angeordnet ist, und wobei die Verstelleinrichtungen ausgebildet sind zum Schwenken einer jeweiligen Rotationsachse (15, 25) von Rotoren (13, 23) der Windenergieanlagen in einer Ebene senkrecht zu einer Rotationsebene (14, 24) der Rotoren, und einer Steuerungseinrichtung zur Ansteuerung der Verstelleinrichtungen zur individuellen Änderung der Schwenkposition jeder Windenergieanlage, wobei ein vorbestimmter Winkel zwischen den Rotationsebenen der Rotoren und einer Erstreckungsrichtung der Traverse etwa 0° bis 40° beträgt.

## Beschreibung

Die vorliegende Erfindung betrifft ein Windenergieanlagensystem mit zwei Windenergieanlagen, und insbesondere ein Windenergieanlagensystem, bei dem die beiden Windenergieanlagen beweglich auf einer gemeinsamen Tragstruktur angeordnet sind.

Windenergieanlagen unterschiedlicher Ausführung und Konzepte sind seit längerer Zeit bekannt. Bei den bekannten Windenergieanlagen ist im Allgemeinen ein Maschinenträger vorgesehen, der eine Turbine mit Rotor und Rotorblättern, einen Triebstrang mit Generator und gegebenenfalls einem Getriebe und einer Bremse sowie eine weitere erforderliche Infrastruktur aufnimmt. Die gesamten Einrichtungen sind an einem oberen Ende einer Tragstruktur, wie beispielsweise eines Turms angeordnet. Im Einzelnen ist die an dem oberen Ende des Turms angeordnete Windenergieanlage beweglich bzw. drehbar in Verbindung mit einem Azimut-Lager gelagert, sodass eine Ausrichtung des Rotors und damit des Maschinenträgers in jeder Himmelsrichtung möglich ist und somit sich ändernden Windrichtungen angepasst werden kann. Es sind an dem Maschinenträger entsprechende Antriebseinrichtungen zur Azimutverstellung vorgesehen.

Bei bekannten Windenergieanlagen, die eine bestimmte Nennleistung überschreiten, und beispielsweise mehr als 500 kW an Leistung aufweisen, ist der Rotor der Windenergieanlage aus der Windrichtung gesehen vor dem Turm der Windenergieanlage angeordnet, und es kann der Rotor vorzugsweise aus zwei oder drei an einer Rotornabe angeordneten Rotorblättern bestehen. Der Rotor dreht sich bei einer entsprechenden Windlast um eine im Wesentlichen horizontale Achse, die sich in einer Ebene senkrecht zu der Längsachse (Erstreckungsachse) des Turms erstreckt und auch gegenüber dieser Ebene um wenige Winkelgrade in Abhängigkeit von bestimmten Bedingungen, wie beispielsweise einer Windlast (Windgeschwindigkeit) nach oben geneigt sein kann. Hinzu kommt die Verstellmöglichkeit der Windenergieanlage am oberen Ende des Turms mittels der genannten Azimutverstellung.

Derartige Windenergieanlagen in der vorstehend beschriebenen Weise umfassen somit als Tragstruktur einen Turm, und die einzelne an dessen oberen Ende angeordnete Windenergieanlage.

Mit der Anordnung einer Mehrzahl von einzelnen Windenergieanlagen in einem sogenannten Windpark wird eine kostengünstige Stromerzeugung erstrebt. Hierbei liegt der Schwerpunkt bei der weiteren Entwicklung von Windenergieanlagen mit einer möglichst hohen installierten Leistung. Diese wird im Allgemeinen durch die Vergrößerung der überstrichenen Kreisfläche der einzelnen Windenergieanlagen und damit durch eine Vergrößerung der Rotorblattlänge des jeweiligen Rotors der Windenergieanlage erreicht. Bei einem möglichen Rotordurchmesser von etwa 200 m können allerdings die voraussichtlichen Kosten einer derartigen Anlage höher sein als bei Windenergieanlagen mit einem geringeren Rotordurchmesser. Dies steht im Zusammenhang mit der notwendigen Anhebung der Turmhöhe für Rotoren mit großem Durchmesser. Dies bedeutet insbesondere im Küstenbereich oder Offshore-Bereich ein deutlicher Anstieg der Kosten für die Gründung und die Errichtung der jeweiligen Türme als Grundlage für eine derartige Windenergieanlage sowie eine größere Masse der Rotorblätter.

Es sind in diesem Zusammenhang Systeme von Windenergieanlagen bekannt, bei denen meist in einer horizontalen Anordnung zwei Windenergieanlagen zueinander benachbart auf einer gemeinsamen Tragstruktur angeordnet sind. In Abhängigkeit von den Dimensionen der Rotoren (Rotorblattlänge) können sich dabei äquivalente Kreisflächen der zwei einzelnen Windenergieanlagen auf der gemeinsamen Tragstruktur ergeben, sodass insgesamt eine Verbesserung des Ertrags im Vergleich zu den erforderlichen Kosten möglich ist. Kosteneinsparungen bestehen in der Möglichkeit einer geringeren Rotorblattlänge und einer etwas geringeren Leistungsklasse der einzusetzenden Windenergieanlagen auf der gemeinsamen Tragstruktur (sogenannter Twin-Rotor).

Aus der Druckschrift DE 10 2012 102 876 A1 ist eine Windkraftanlage mit zwei Rotoren bekannt, bei der auf einer gemeinsamen Tragstruktur die Windkraftanlagen jeweils als Luv- und Lee-Läufer ausgebildet sind. Die jeweiligen Drehachsen der Rotoren sind zueinander parallel und beabstandet, und es sind die Rotationsebenen der jeweiligen Rotoren zueinander parallel und ebenfalls beabstandet. Mit der starren Anordnung der Windkraftanlagen auf einer gemeinsamen Tragstruktur kann eine gemeinsame Azimutverstellung im Hinblick auf eine sich verändernde Windrichtung durchgeführt werden. Die beiden Windkraftanlagen an der gemeinsamen Tragstruktur sind zueinander ortsfest angeordnet.

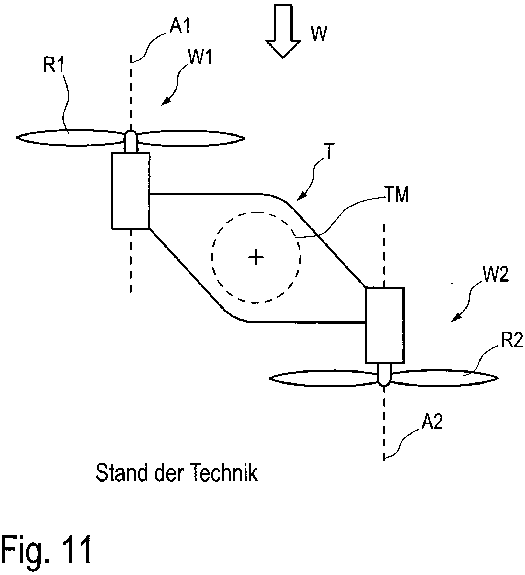

Eine derartige Situation ist in vereinfachter Darstellung in Fig. 11 gezeigt. Speziell zeigt Fig. 11 eine bekannte Anordnung von zwei Windkraftanlagen an einer gemeinsamen Tragstruktur T, wobei die gesamte Anordnung in der Draufsicht dargestellt ist. Eine erste Windkraftanlage W1 und eine zweite Windkraftanlage W2 sind an der gemeinsamen Tragstruktur T ortsfest bzw. starr angebracht. Die jeweiligen Rotoren R1 und R2 drehen sich im Betrieb bei einer entsprechenden Windlast in zueinander parallelen Ebenen, und es sind die Rotorachsen A1 und A2 der beiden Windkraftanlagen W1 und W2 zueinander parallel und entsprechend über die Tragstruktur T beabstandet. Die gesamte Anordnung ist auf einem unterhalb der Tragstruktur T angeordneten Turm TM um die Achse entlang der Erstreckungsrichtung des Turms (senkrecht zur Bildebene von Fig. 11) im Sinne einer gemeinsamen Azimutverstellung drehbar befestigt. Mit einem Pfeil ist eine hauptsächliche Windrichtung (W) bezeichnet.

Die Druckschrift DE 10 2011 015 303 A1 offenbart ein Windkraftwerk, das eine Vielzahl von einzelnen Anlagen aufweisen kann. Auf einer Tragstruktur sind bis zu vier Windenergieanlagen mit ihrem jeweiligen Rotor angeordnet. Die Rotoren sind derart auf der Tragstruktur angeordnet, dass die jeweilige Leistung eines Rotors mittels mechanischer Elemente (Getriebe, Wellen) übertragen wird und somit die Rotoren miteinander starr gekoppelt sind. Die Rotoren laufen teilweise gegenläufig, wobei die jeweiligen Drehkreise einander überlappen, und es greifen die Rotorblätter kammartig mit einem festen Winkelversatz ineinander. Die mehreren Rotoren der Windenergieanlagen können in Gruppen und auch hintereinander angeordnet werden, sodass Luv- und Leeläufer gebildet werden.

Weitere Windkraftanlagen oder Windenergieanlagen sind aus den Druckschriften WO 2012/115512 A1 und DE 10 2009 010 905 A1 bekannt. Hierbei sind zwei Windenergieanlagen mit ihrem jeweiligen Rotor starr an einer gemeinsamen Tragstruktur angeordnet. Die gemeinsame Tragstruktur umfasst zumindest zwei Kragarme und die zumindest zwei Rotoren, die in unabhängigen Vertikalebenen drehbar angeordnet sein können. Es sind teilweise kraftschlüssige Verbindungen vorgesehen, sodass eine mechanische Kupplung vorliegt, durch die der Gleichlauf der Rotoren gewährleistet ist. Auch können Windenergieanlagen auf der gemeinsamen Tragstruktur mit einer unterschiedlichen Höhe der Rotorachse angeordnet sein.

Schließlich offenbart die Druckschrift EP 0 761 964 B1 eine Doppelrad-Windkraftturbine, wobei die beiden Windkraftanlagen mit Luv- und Lee-Läufer auf einer gemeinsamen Tragstruktur angeordnet sind. Die Tragstruktur weist V-förmige Arme auf.

Bei den vorstehend beschriebenen bekannten Kraftwerksanlagen zur Nutzung der Windenergie befinden sich somit zumindest zwei und im Allgemeinen mehrere Windenergieanlagen auf einer gemeinsamen Tragstruktur oder einem gemeinsamen Träger oder Turm. Es werden die Windenergieanlagen als Luv- und Lee-Läufer ausgebildet, wobei im Falle von mehr als zwei Windenergieanlagen mehrere Luv- und Lee-Läufer vorhanden sind. Es kann mit derartigen Anordnungen im Allgemeinen die Luftströmung um die jeweiligen Rotorblätter nicht optimiert werden, da häufig die Windenergieanlagen dicht beieinander liegend auf dem gemeinsamen Träger angeordnet sind und in Abhängigkeit von der speziellen Ausgestaltung auch teilweise eine mechanische Kopplung (wie beispielsweise mittels eines Getriebes) aufweisen. Insbesondere treten unterschiedliche Strömungsverhältnisse am Lee-Läufer im Vergleich zum Luv-Läufer auf.

Der vorliegenden Erfindung liegt daher die Aufgabe zugrunde, ein Windenergieanlagensystem der eingangs genannten Art derart auszugestalten, dass die Strömungsverhältnisse an den einzelnen Windenergieanlagen zur Vergrößerung der Leistungsausbeute optimiert werden können.

Erfindungsgemäß wird diese Aufgabe durch ein Windenergieanlagensystem gemäß den Merkmalen der beigefügten Patentansprüche gelöst.

Das erfindungsgemäße Windenergieanlagensystem mit auf einer gemeinsamen Tragstruktur angeordneten Windenergieanlagen zur Umwandlung von Windenergie in elektrische Energie umfasst des Weiteren einen Zentralturm und einem ersten und zweiten Tragast sowie eine Traverse, die an dem äußeren Ende der Tragäste geordnet ist und diese verbindet, eine erste Windenergieanlage, die an einem ersten Endbereich der Traverse mittels einer ersten Verstelleinrichtung drehbar angeordnet ist, eine zweite Windenergieanlage, die an einem zweiten Endbereich der Traverse mittels einer zweiten Verstelleinrichtung drehbar angeordnet ist, und wobei die erste und die zweite Verstelleinrichtung ausgebildet sind zum Schwenken einer jeweiligen Rotationsachse von Rotoren der Windenergieanlagen in einer Ebene senkrecht zu einer jeweiligen Rotationsebene der Rotoren, und eine Steuerungseinrichtung zur Ansteuerung der Verstelleinrichtungen zur individuellen Änderung und Einstellung der Schwenkposition jeder Windenergieanlage, wobei ein vorbestimmter Winkel zwischen den Rotationsebenen der Rotoren der Windenergieanlagen und einer Erstreckungsrichtung der Traverse etwa 0° bis 40° beträgt.

Mit der erfindungsgemäßen Ausgestaltung des Windenergieanlagensystems, bei dem die zumindest zwei Windenergieanlagen auf einer gemeinsamen Tragstruktur angeordnet sind, ist es möglich, die beiden Windenergieanlagen unabhängig voneinander und individuell hinsichtlich ihres jeweiligen Azimutwinkels zu verstellen. Dies bedeutet eine Drehung der räumlichen Lage der Drehachse des jeweiligen Rotors der Windenergieanlage in einer Ebene, in der die Drehachse liegt, und damit eine Drehung um die Hochachse jeder Windenergieanlage.

Damit kann die Drehebene der Rotoren der jeweiligen Windenergieanlage relativ zur Erstreckungsrichtung einer Traverse, an der die Windenergieanlagen beweglich angeordnet sind, innerhalb vorbestimmter Bereiche eingestellt und auch individuell (d. h. getrennt und unabhängig voneinander) verändert werden. Es können die einzelnen Windenergieanlagen gemeinsam in gleicher Weise oder individuell mit gewissen Unterschieden relativ zueinander und zu der Windrichtung verstellt werden, sodass die Strömungsverhältnisse insbesondere für den Lee-Läufer der beiden Windenergieanlagen verbessert und optimiert werden kann. Auf diese Weise kann durch die Verstellmöglichkeit jeder Windenergieanlage um ihre jeweilige Hochachse eine Verbesserung der Leistungsausbeute und damit des Wirkungsgrads erreicht werden. Insbesondere können ungünstige Windstaubedingungen bei dem Lee-seitigen Rotor vermindert werden.

Berechnungen haben gezeigt, dass der Energieertrag eines Twin-Rotor-Systems gegenüber einem System mit einem Einzelrotor mit äquivalenter Leistung verbessert werden kann, wenn die beiden Rotorflächen in einem geringen Abstand voneinander und vorzugsweise parallel angeordnet sind. Die Auswirkungen auf den Energieertrag hängen sehr von dem gegenseitigen Einfluss der Nachläufe der Rotorströmung auf die Umströmung der Rotorblätter ab. Bei einem festen Abstand der Azimutachsen der beiden Rotoren zueinander kann auf die Ausprägung des Nachlaufs speziell durch einen unterschiedlichen (individuellen) Azimutwinkel der Rotoren zueinander Einfluss genommen werden.

Weitere Ausgestaltungen der vorliegenden Erfindung sind in den abhängigen Patentansprüchen angegeben.

Es können bei dem Windenergieanlagensystem der erste und zweite Tragast an seinem jeweiligen unteren Ende durch einen Verbindungsbereich miteinander verbunden sein, und es kann der Verbindungsbereich mittels einer Zentralverstelleinrichtung mit dem Zentralturm drehbar verbunden sein.

Es kann eine der ersten und zweiten Windenergieanlagen vor und die andere Windenergieanlage hinter der Tragstruktur relativ zu einer Windrichtung angeordnet sein.

Die erste und zweite Windenergieanlage können oberhalb oder unterhalb des jeweiligen Endbereichs der Traverse angeordnet sein, und die jeweilige erste und zweite Verstelleinrichtung können zwischen der Windenergieanlage und dem jeweiligen Endbereich zum Tragen der Windenergieanlagen angeordnet sein.

Es kann der vorbestimmte Winkel für beide Windenergieanlagen unterschiedlich oder vorzugsweise gleich sein.

Es kann die Zentralverstelleinrichtung zwischen dem Zentralturm und einem Verbindungsbereich des ersten und zweiten Tragastes ausgebildet sein zur Verstellung einer Raumlage der Tragstruktur relativ zum Zentralturm und zum Anpassung des Windenergieanlagensystems an die Windrichtung nach dem Einstellen der Schwenkposition der Rotationsachsen der jeweiligen Windenergieanlage.

Es kann die erste und zweite Verstelleinrichtung ausgebildet sein, nach einer Einstellung eines ersten vorbestimmten Winkels der Rotationsachsen der Rotoren der jeweiligen Windenergieanlage die Rotationsachsen unterschiedlich oder gleichartig um weitere vorbestimmte kleine Winkel in beiden Richtungen ausgehend von dem ersten vorbestimmten Winkel zu verstellen.

Die Erfindung wird nachstehend anhand von Ausführungsbeispielen in Verbindung mit der Zeichnung näher beschrieben. Es zeigen:
Fig. 1 eine vereinfachte und schematische Gesamtansicht des Windenergieanlagensystems mit den Rotorkreisen der Windenergieanlagen in einer Blickrichtung entgegen der bevorzugten Windrichtung,
Fig. 2 eine Draufsicht auf das Windenergieanlagensystem gemäß Fig. 1, wobei die jeweiligen Rotationsebenen der Windenergieanlagen zu einer Trägereinrichtung einen Winkel aufweisen,
Fig. 3 eine Draufsicht auf das Windenergieanlagensystem gemäß Fig. 1 und ähnlich Fig. 2, wobei Verstellmöglichkeiten der Windenergieanlagen veranschaulicht sind,
Fig. 4 eine Teilansicht des Windenergieanlagensystems gemäß Fig. 1, bei der die Windenergieanlage unterhalb der Trägereinrichtung angeordnet ist,
Fig. 5 eine Teilansicht des Windenergieanlagensystems gemäß Fig. 1, wobei die Windenergieanlage oberhalb der Trägereinrichtung angeordnet ist,
Fig. 6 eine Draufsicht auf einen Teil des Windenergieanlagensystems gemäß Fig. 1, wobei die Windenergieanlage fest mit einer Stirnseite der Trägereinrichtung verbunden ist,
Fig. 7 (Fig. 7A und 7B) schematische Darstellungen zur Veranschaulichung des Anhebens und der Montage der Windenergieanlage an der Trägereinrichtung,
Fig. 8 ein vereinfachtes Blockschaltbild der elektrischen Verbindungen der Windenergieanlagen mit einem angeschlossenen Stromnetz,
Fig. 9 eine vereinfachte und schematische Darstellung eines Windenergieanlagensystems mit mehr als zwei Windenergieanlagen gemäß einer Abwandlung des Ausführungsbeispiels,
Fig. 10 eine schematische und weiter vereinfachte Darstellung des Windenergieanlagensystems mit mehr als zwei Windenergieanlagen gemäß Fig. 9 mit der Veranschaulichung der individuellen Verstellmöglichkeiten der einzelnen Windenergieanlagen, und
Fig. 11 eine schematische Darstellung einer Anordnung zweier Windenergieanlagen auf einer gemeinsamen Tragstruktur gemäß dem Stand der Technik.

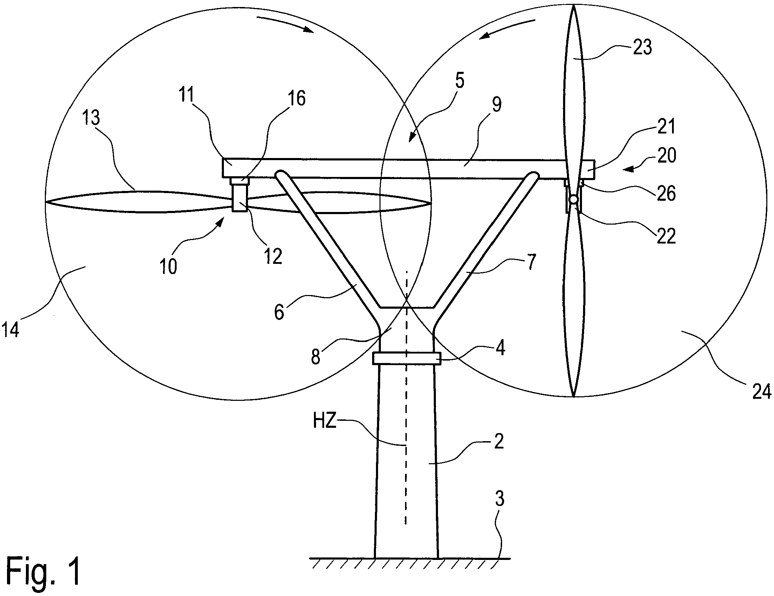

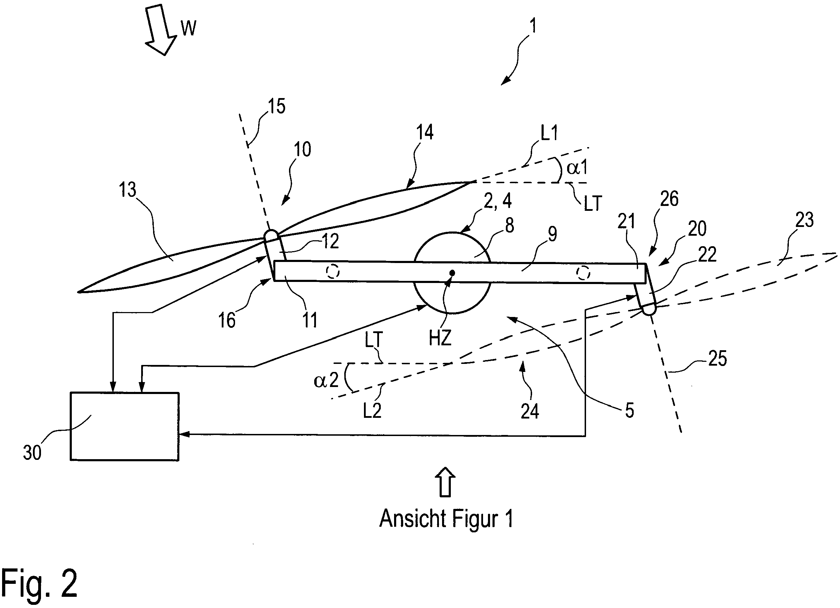

Die vorliegende Erfindung wird nachstehend anhand eines Ausführungsbeispiels in Verbindung mit der Darstellung in den Figuren 1 und 2 beschrieben.

Fig. 1 zeigt eine Frontansicht des Windenergieanlagensystems 1 entgegen der Richtung des auf das Windenergieanlagensystem 1 einwirkenden Windes. Das Windenergieanlagensystem 1 umfasst einen unteren Turmteil oder Zentralturm 2, der mit Hilfe eines Sockelbereichs 3 auf einer Erdoberfläche angeordnet ist. Im Falle einer sogenannten Offshore-Anlage befindet sich der Sockelbereich 3 in der Nähe einer Küste im Meer, wobei der Sockelbereich 3 im Allgemeinen unter der Wasseroberfläche angeordnet ist und den Zentralturm 2 trägt. Die Offshore-Anlage ist an die Bedingungen und speziell die Belastungen eines Betriebs am Meer angepasst.

Am oberen Ende des Zentralturms 2 ist eine Verstelleinrichtung angeordnet, die als eine Zentralverstelleinrichtung 4 dient und ausgebildet ist zum Verstellen und insbesondere zum Verdrehen einer damit verbundenen Tragstruktur 5 des Windenergieanlagensystems 1.

Die Tragstruktur 5 umfasst einen ersten Tragast 6 sowie einen zweiten Tragast 7, die zueinander V-förmig angeordnet und in einem Verbindungsbereich 8 an deren unteren Ende miteinander verbunden sind. Der Verbindungsbereich 8 stellt des Weiteren die Verbindung her zu der Zentralverstelleinrichtung 4 und ist mittels der Zentralverstelleinrichtung 4 relativ zum Zentralturm 2 drehbar gelagert. Es kann mit der Zentralverstelleinrichtung 4 eine Raumlage bzw. eine Drehposition der gesamten Tragstruktur 5 relativ zum Zentralturm 2 verändert bzw. eingestellt werden.

Die Tragstruktur 5 umfasst des Weiteren eine Trägereinrichtung, die auch als Traverse 9 bezeichnet wird, und die einerseits die oberen Enden des ersten und zweiten Tragastes 6 und 7 miteinander verbindet, und die andererseits ausgebildet ist zum beweglichen oder festen Tragen einer ersten und einer zweiten Windenergieanlage 10 und 20. Dies ist nachstehend im Einzelnen beschrieben.

Der erste und zweite Tragast 6 und 7 stützen oder tragen die Trägereinrichtung oder Traverse 9 nicht unmittelbar an deren jeweiligen äußeren Ende, sondern sind hinsichtlich des Stützpunkts entlang der Erstreckungsrichtung der Traverse 9 nach innen versetzt, sodass ein erster Endbereich 11 und ein zweiter Endbereich 21 der Traverse 9 gebildet werden. Der erste und zweite Endbereich 11 und 21 bilden jeweils ein freies auskragendes Teil der Traverse 9. Die erste Windenergieanlage 10 ist am ersten Endbereich 11 und die zweite Windenergieanlage 20 am zweiten Endbereich 21 angeordnet. Die jeweilige erste und zweite Windenergieanlage 10 und 20 können an dem jeweiligen ersten oder zweiten Endbereich 11 und 21 beweglich (speziell drehbar) oder fest angeordnet sein. Dies wird im Einzelnen nachstehend noch in Verbindung mit weiteren Figuren beschrieben.

Die erste Windenergieanlage 10 umfasst ein erstes Maschinenhaus 12 und einen ersten Rotor 13, der zwei oder drei Rotorblätter aufweisen kann. Vorzugsweise ist der erste Rotor 13 als ein Zwei-Blatt-Rotor ausgebildet.

Die zweite Windenergieanlage 20 umfasst ein zweites Maschinenhaus 22 sowie einen zweiten Rotor 23, der in gleicher Weise wie der erste Rotor 13 mehrere Rotorblätter aufweisen kann und vorzugsweise als ein Zwei-Blatt-Rotor ausgebildet ist.

Das Maschinenhaus kann dabei als ein Turbinenträger dienen, wobei die Turbine den jeweiligen Rotor 13 oder 23, den (nicht gezeigten) Generator sowie die weiteren erforderlichen Komponenten umfasst und in das Maschinenhaus bzw. den Turbinenträger eingesetzt wird.

Der erste Rotor 13 der ersten Windenergieanlage 10 rotiert in einer ersten Rotationsebene um eine erste Rotationsachse 15, die senkrecht zur ersten Rotationsebene 14 steht. Der zweite Rotor 23 der zweiten Windenergieanlage 20 rotiert um eine zweite Rotationsachse 25, die senkrecht auf der zweiten Rotationsebene 24 steht. Die jeweiligen Rotationsebenen 14 und 24 sind in Fig. 1 veranschaulicht, und es sind die jeweiligen ersten und zweiten Rotationsachsen 15 und 25 in Fig. 2 in der Draufsicht veranschaulicht. Die Rotoren 13 und 23 drehen sich synchron mit einem festen Phasenunterschied von etwa 90°, so dass die umlaufenden Rotorblätter des einen Rotors jeweils in die umlaufende Lücke des anderen Rotors greifen. Die Rotoren 13 und 23 laufen in unterschiedlichen Drehrichtungen.

Fig. 2 zeigt in vereinfachter und schematischer Darstellung in Form einer Draufsicht das Windenergieanlagensystem 1 in Verbindung mit einer zentralen Steuerungseinrichtung 30, die mit den verschiedenen Elementen des Windenergieanlagensystems 1 verbunden ist und einerseits Erfassungsergebnisse über Betriebszustände aufnimmt und andererseits Steuerungsmaßnahmen vornimmt, indem entsprechende Steuerungssignale an Betätigungseinrichtungen übermittelt werden. Das Windenergieanlagensystem 1 umfasst entsprechende in den Figuren nicht gezeigte Sensoreinrichtungen und die Betätigungseinrichtungen. Es ist ferner in Figur 2 und in weiteren Figuren ähnlicher Darstellungen mittels eines Pfeils die hauptsächliche Windrichtung W angedeutet.

Die Figuren 1 und 2 zeigen des Weiteren in einer Anordnung zwischen dem jeweiligen ersten und zweiten Endbereich 11 und 21 der Traverse 9 und dem ersten und zweiten Maschinenhaus 12 und 22 der Windenergieanlagen 10 und 20 eine erste und eine zweite Verstelleinrichtung 16 und 26, die jeweils ausgebildet sind zum Verstellen und speziell dem Schwenken des jeweiligen Maschinenhauses 12 und 22 in Abhängigkeit von einer Betätigung der in der ersten und zweiten Verstelleinrichtung 16 und 26 enthaltenen (und nicht gezeigten) Betätigungseinrichtungen. Im Einzelnen kann jede Windenergieanlage 10 und 20 in einer Ebene im Wesentlichen senkrecht zur jeweiligen ersten und zweiten Rotationsebene 14 und 24 geschwenkt werden, sodass die erste und zweite Rotationsachse 15 und 25 der jeweiligen Rotoren 13 und 23 in dieser Ebene geschwenkt werden kann. Das Verstellen oder Schwenken der jeweiligen Maschinenhäuser 12 und 22 bzw. Rotationsachsen 15 und 25 erfolgt im Wesentlichen in einer Ebene parallel zu der Verstellebene der Zentralverstelleinrichtung 4 zwischen dem Zentralturm 2 und dem Verbindungsbereich 8 (Fig. 1). Die angegebenen Verstelleinrichtungen, wie die Zentralverstelleinrichtung 4 und die erste und zweite Verstelleinrichtung 16 und 26 sind unabhängig voneinander zu betätigen, und entsprechende (nicht gezeigte) Sensoren dienen zu Erfassung der tatsächlichen Position der jeweiligen Komponenten.

Die Darstellung in Fig. 1 aus einer Sicht entgegen der überwiegenden Windrichtung zeigt die Einstellung der jeweiligen Windenergieanlagen 10 und 20 in einer Position, bei der eine mögliche Verstellung bzw. ein Verstellwinkel α (vorbestimmter Winkel) den Wert null hat, sodass im Wesentlichen die beiden Rotationsachsen 15 und 25 senkrecht auf der Erstreckungsrichtung der Traverse 9 stehen und die vertikalen Rotationsebenen 14 und 24 parallel zur Erstreckungsrichtung der Traverse 9 verlaufen. Die Rotationsebenen 14 und 24 (Rotationskreise) der Rotoren 13 und 23 der Windenergieanlagen 10 und 20 können sich dabei in einem bestimmten Teilbereich überschneiden. Es ist dies auch in Figur 1 angedeutet.

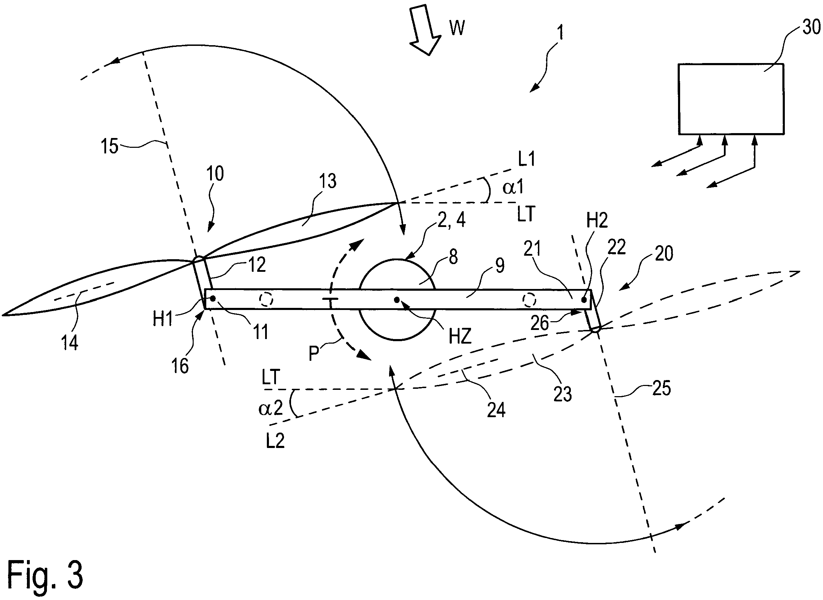

Demgegenüber zeigt Fig. 2 die beiden Windenergieanlagen 10 und 20 mit einem vorbestimmten Winkel oder Verstellwinkel α relativ zur Erstreckungsrichtung der Traverse 9 mit einem Wert, der größer als null ist. Im Einzelnen werden nachstehend unter Bezugnahme auf Fig. 3 die Verstellmöglichkeiten des Windenergieanlagensystems 1 beschrieben.

Fig. 3 zeigt in vereinfachter und schematischer Weise und ebenfalls in Form einer Draufsicht Beispiele für die grundsätzlichen Verstellmöglichkeiten bei dem Windenergieanlagensystem 1, wobei die entsprechenden Verstellmöglichkeiten durch die Zentralverstelleinrichtung 4 sowie die erste und zweite Verstelleinrichtung 16 und 26 gewährleistet sind. Die tatsächliche Verstellung bzw. das Schwenken der jeweiligen Komponenten wird mittels der Steuerungseinrichtung gesteuert (bzw. auch geregelt). Hierzu sind entsprechende Sensoren zur Erfassung der tatsächlichen Azimut-Position oder des Verstellungsgrads vorgesehen, zur Vereinfachung der Figuren jedoch nicht im Einzelnen gezeigt.

In der Darstellung gemäß Fig. 3, die ähnlich ist zur Darstellung in Fig. 2, sind die jeweiligen Windenergieanlagen 10 und 20 relativ zu der Erstreckungsrichtung der Traverse 9 in einer Position veranschaulicht, bei der die jeweilige erste und zweite Rotationsebene 14 und 24 den jeweiligen Verstellwinkel α1 oder α2 relativ zur Erstreckungsrichtung der Traverse 9 bildet, wobei der jeweilige Verstellwinkel α1 oder α2 größer als null ist.

Bei der Darstellung der Verstellwinkel bzw. vorbestimmten Winkel α1 und α2 bezeichnet eine gestrichelte Linie LT die Erstreckungsrichtung der Traverse 9 bzw. verläuft parallel zu dieser Erstreckungsrichtung, bezeichnet eine gestrichelte Linie L1 den zur Darstellungs- oder Bildebene senkrechten Verlauf der ersten Rotationsebene 14, und bezeichnet eine gestrichelte Linie L2 den Verlauf der zweiten Rotationsebene 24 ebenfalls senkrecht zur Bildebene gemäß Fig. 3. In Fig. 3 weisen somit beide Windenergieanlagen 10 und 20 einen gleichen Verstellwinkel α1 = α2 auf (mit Toleranzen). Grundsätzlich besteht die Möglichkeit, die Windenergieanlagen 10 und 20 des Windenergieanlagensystems 1 getrennt und unabhängig voneinander auf verschiedene Winkel einzustellen. Im Allgemeinen werden jedoch die jeweiligen Winkel α1 und α2 entweder identisch sein (Verstellwinkel α1 = α2, bzw. α1 **≈** α2 unter Berücksichtigung unvermeidlicher Toleranzen) oder in Abhängigkeit von speziellen Strömungsbedingungen in geringem Umfang unterschiedlich sein. Es liegen dann bei den Windenergieanlagen 10 und 20 jeweilige individuelle Verstellwinkel α1 und α2 vor, wobei dann für die Verstellwinkel gilt α1 ≠ α2. Sofern nicht extreme Bedingungen vorliegen, werden in der praktischen Anwendung die Unterschiede zwischen den individuellen Verstellwinkeln α1 und α2 gering sein und kleine Winkel bzw. wenige Winkelgrade betragen.

In Fig. 3 ist ebenfalls im Hinblick auf die gestrichelte Linien L1 und L2 angedeutet, dass der jeweilige Verstellwinkel in einem weiten Bereich verstellbar ist, ungeachtet dessen, dass bevorzugte Bereiche mit kleineren Winkeln für einen sinnvollen Betrieb des Windenergieanlagensystems 1 geeignet sind. In diesem Zusammenhang ist ferner durch Pfeile P ebenfalls die von der Verstellmöglichkeit der einzelnen Windenergieanlagen 10 und 20 unabhängige Verstellmöglichkeit in Verbindung mit einem Betrieb der Zentralverstelleinrichtung 4 zwischen dem Zentralturm 2 und dem Verbindungsbereich 8 angedeutet, wobei die Betätigung der Zentralverstelleinrichtung 4 zu einer gemeinsamen Verstellung (d. h. einem Schwenken) der Windenergieanlagen 10 und 20 und damit des gesamten Windenergieanlagensystems 1 führt. Hierbei wird speziell die Tragstruktur 5 mit den Windenergieanlagen 10 und 20 geschwenkt.

Mittels der Steuerungseinrichtung 30 werden die entsprechenden Betätigungseinrichtungen (Aktuatoren) der jeweiligen Verstelleinrichtungen 4, 16 und 26 angesteuert, und es erfolgt des Weiteren durch eine entsprechende (nicht gezeigte) Sensorik eine Erfassung der jeweiligen Verstellposition der einzelnen Windenergieanlagen 10 und 20 relativ zur Traverse 9 sowie der Tragstruktur 5 relativ zum Zentralturm 2 in Verbindung mit der Zentralverstelleinrichtung 4. Die drei vorgesehenen Verstelleinrichtungen 4, 16 und 26 sind unabhängig voneinander verstellbar und werden unabhängig voneinander hinsichtlich ihrer jeweiligen Verstellposition oder Drehposition (Schwenkposition, Raumlage) erfasst. Es ist dies symbolisch in Verbindung mit der Steuerungseinrichtung 30 in Fig. 3 veranschaulicht.

Es besteht mit der ersten und zweiten Verstelleinrichtung die Möglichkeit, nach einer Einstellung eines (ersten) vorbestimmten Winkels α1 und α2 der Rotationsachsen der Rotoren der jeweiligen Windenergieanlage die Rotationsachsen unabhängig voneinander unterschiedlich oder gleichartig um weitere vorbestimmte kleine individuelle Winkel in beiden Richtungen ausgehend von dem ersten vorbestimmten Winkel zu verstellen (individuelles Mikro-Yawing). Es kann auf diese Weise eine geringe Schwankung der Windrichtung oder Windstärke oder eine ungünstige Strömungssituation an den Rotorblättern zumindest zum Teil ausgeglichen werden. Ferner können diese Maßnahmen durch einen Betrieb der Zentralverstelleinrichtung 4 unterstützt werden.

Im Allgemeinen kann ein gemeinsamer Verstellwinkel α1 und α2 etwa zwischen 0° und 40° relativ zur Erstreckungsrichtung der Traverse 9 (Linie LT) betragen. Vorzugsweise kann der Winkel etwa 0° bis 10° betragen. Grundsätzlich besteht hinsichtlich der Verstellmöglichkeit mittels der ersten und zweiten Verstelleinrichtung 16 und 26 eine Verstellung oder ein Schwenken der ersten oder zweiten Rotationsachse (Rotordrehachse) 15 und 16 um einen gesamten Winkel kleiner als 360°. Es sind entsprechende Sicherheitseinrichtungen vorgesehen, die verhindern, dass eine Verstellung der jeweiligen Windenergieanlage 10 oder 20 in der Weise vorgenommen wird, dass der Verstellwinkel α1 oder α2 kleiner als null wird und dabei die Rotoren 13 und 23 die Traverse 9 berühren können. Somit beträgt beispielsweise der sinnvolle Verstellwinkel der ersten und zweiten Rotationsachse 15 und 25 von einer Ausgangsposition senkrecht zur Erstreckungsrichtung der Traverse 9 (Linie LT) bis zur gegenüberliegenden entsprechenden Position etwa 180° in Verbindung mit der ersten und zweiten Verstelleinrichtung 16 und 26. Die Zentralverstelleinrichtung 4 ist in der Lage, in einem Winkel kleiner als 360° zu verstellen, in Abhängigkeit von mechanischen Bedingungen, wie beispielsweise Leitungsverbindungen, zwischen der Tragstruktur 5 und dem Zentralturm 2.

Mit den unabhängig voneinander zu betreibenden Verstelleinrichtungen 4, 16 und 26 können vielfältige und auch gezielt voneinander abhängige Verstellmöglichkeiten verwirklicht werden. Insbesondere bei Ausfall einer Turbine einer der Windenergieanlagen können sich für die verbleibende Windenergieanlage bei einem Notbetrieb günstige Winkelkombinationen aus Turmazimut (über die Zentralverstelleinrichtung 4) und Windenergieanlagen-Azimut (über jeweilige Verstelleinrichtung 16 oder 26) ergeben. Beispielsweise kann die Turbine bzw. Rotorachse der funktionsfähigen Windenergieanlage etwa senkrecht zur Traverse ausgerichtet werden.

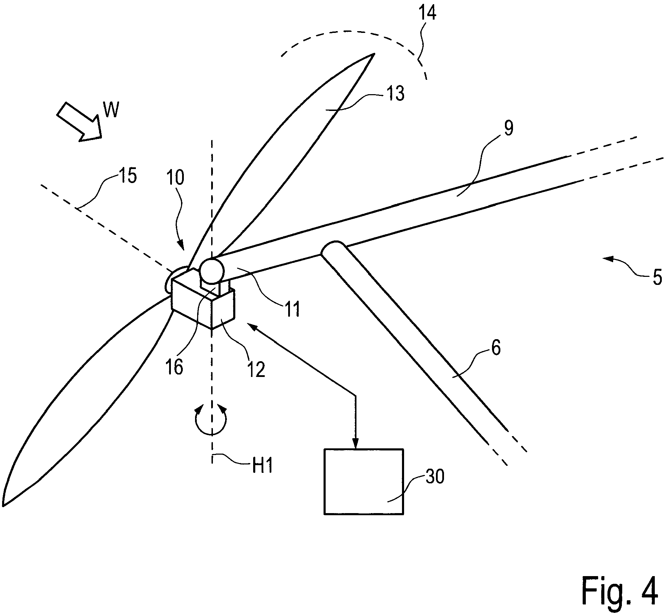

In Verbindung mit den Figuren 4, 5 und 6 werden nachstehend die Anordnungen der Windenergieanlagen 10 und 20 an der Tragstruktur 5 und insbesondere an den ersten und zweiten Endbereichen 11 und 21, d. h. an den freien Enden der Traverse 9 beschrieben.

Fig. 4 veranschaulicht einen Teil des Windenergieanlagensystem 1 gemäß Fig. 1 und speziell am Beispiel der ersten Windenergieanlage 10 die Anordnung derselben an der Traverse 9 am ersten Endbereich 11 der Traverse 9. Im Einzelnen befindet sich die erste Windenergieanlage 10 unterhalb des ersten Endbereichs 11 der Traverse 9, wobei zwischen dem ersten Maschinenhaus 12 und dem ersten Endbereich 11 die erste Verstelleinrichtung 16 angeordnet ist. Die erste Verstelleinrichtung 16, die somit zwischen dem ersten Maschinenhaus 12 und dem ersten Endbereich 11 der Traverse 9 angeordnet ist, ermöglicht die vorstehend in Verbindung mit den Figuren 2 und 3 beschriebene Verstellmöglichkeit der ersten Windenergieanlagen 10 und sinngemäß bzw. in gleichartiger Weise (analog) der zweiten Windenergieanlage 20 am anderen (zweiten) Endbereich 21 der Traverse 9.

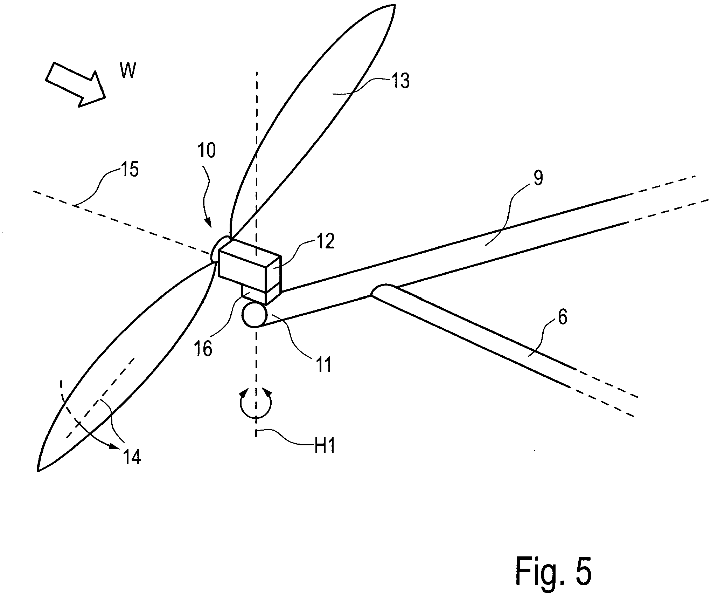

Die Verstellmöglichkeit wird ferner gemäß Fig. 4 (und in gleichartiger Weise auch in Fig. 5) veranschaulicht durch die Angabe einer Hochachse, wie im vorliegenden Fall der ersten Hochachse H1, um die das Verstellen oder Schwenken der ersten Windenergieanlage 10 in Verbindung mit der ersten Verstelleinrichtung 16 erfolgt. Eine entsprechende Ansteuerung im Sinne einer Betätigung oder Erfassung von Betriebszuständen durch die Steuerungseinrichtung 30 ist angedeutet. Es ist in Fig. 4 die Anordnung der ersten Windenergieanlage 10 gezeigt, wobei zur Vereinfachung der Darstellung jeweils Aktuatoren zur Durchführung der Verstellung und Sensoren zur Erfassung von Betriebs- oder Ist-Zuständen nicht gezeigt sind. Die Anordnung der zweiten Windenergieanlage 20 am gegenüberliegenden Ende der Traverse 9 am zweiten Endbereich 21 der Traverse 9 besteht in gleichartiger Weise.

In einer alternativen Anordnung zeigt Fig. 5 und erneut am Beispiel der ersten Windenergieanlage 10 die Anordnung derselben am ersten Endbereich 11 der Traverse 9, wobei speziell die erste Windenergieanlage 10 oberhalb der Traverse 9 bzw. des ersten Endbereichs 11 derselben angeordnet ist. Zwischen dem ersten Endbereich 11 und dem ersten Maschinenhaus 12 der ersten Windenergieanlage 10 ist die erste Verstelleinrichtung 16 angeordnet und ermöglicht ein Verstellen bzw. ein Schwenken der gesamten ersten Windenergieanlage 10 in der in Verbindung mit den Figuren 2 und 3 beschriebenen Weise um die entsprechende erste Hochachse H1. Die zweite Windenergieanlage 20 ist am gegenüberliegenden Ende der Traverse 9 am zweiten Endbereich 21 ebenfalls oberhalb der Traverse 9 angeordnet. Das Schwenken um die Hochachse betrifft analog die (in den Figuren 4 und 5 nicht gezeigte) zweite Hochachse H2 der zweiten Windenergieanlage 20.

In den Figuren 4 und 5 sind die Windenergieanlagen 10 und 20 jeweils entweder unterhalb oder oberhalb des jeweiligen Endbereichs 11 und 21 der Traverse 9 gezeigt. Es besteht auch die Möglichkeit die Windenergieanlagen unterschiedlich anzuordnen, wobei eine der Windenergieanlagen oberhalb und die andere unterhalb der Endbereiche 11 und 21 der Traverse 9 angeordnet ist.

Eine Anordnung der Windenergieanlagen oberhalb oder unterhalb der äußeren Endbereiche 11 und 21 der Traverse 9 hat insbesondere einen Einfluss auf die Montage der jeweiligen Windenergieanlage an ihrer jeweiligen Position. Ist die jeweilige Windenergieanlage 10 oder 20 oberhalb der Traverse 9 angeordnet, dann wird nach der Anordnung des Maschinenhauses 12 und 22 an bzw. oberhalb der Traverse 9 und über der Verstelleinrichtung 16 und 26 die Turbine in Richtung des Maschinenhauses 12 und 22 angehoben und zur Montage im Maschinenhaus um etwa 90° gekippt und befestigt. Bei einer Anordnung des Maschinenhauses 12 und 22 mit der Turbine unterhalb des Endbereichs 11 und 21 der Traverse 9 wird die komplette Windenergieanlage angehoben und unterhalb des Endbereichs mit der dazwischen angeordneten Verstelleinrichtung befestigt.

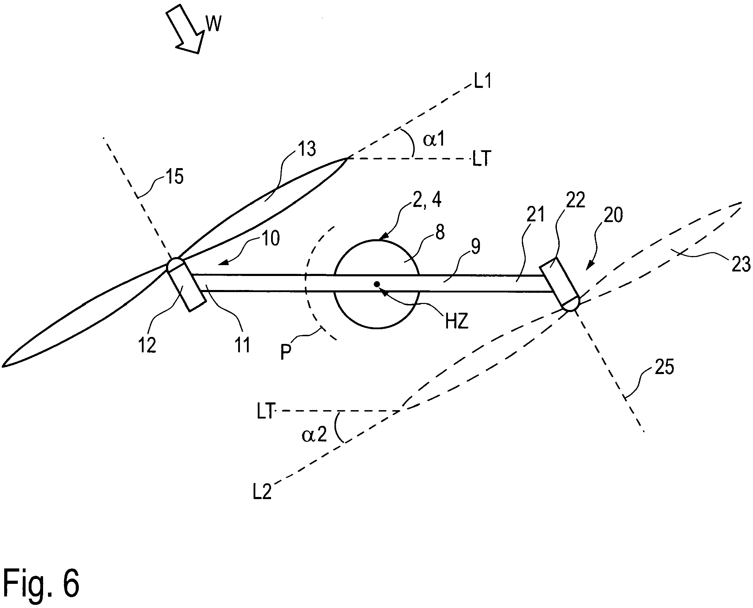

Fig. 6 zeigt eine weitere Anordnung der ersten und zweiten Windenergieanlagen 10 und 20, wobei die Windenergieanlagen 10 und 20 gemäß der Darstellung in Fig. 6 speziell an einem stirnseitigen Ende der Traverse 9 und damit an einem stirnseitigen Ende des jeweils ersten und zweiten Endbereichs 11 und 21 ortsfest relativ zur Traverse 9 angeordnet sind. Fig. 6 zeigt eine Draufsicht ähnlich der Darstellung in den Figuren 2 und 3. Das jeweilige erste und zweite Maschinenhaus 12 und 22 ist ortsfest in einer Funktion als Turbinenträger an dem äußeren Ende der Traverse 9 befestigt, wobei die Befestigung in der Weise erfolgen kann, dass die jeweiligen Rotationsebenen 14 und 24 im Wesentlichen parallel zur Erstreckungsrichtung der Traverse 9 verlaufen.

Vorzugsweise sind jedoch die Windenergieanlagen 10 und 20 des Windenergieanlagensystems 1 in der Weise angeordnet, dass der zur Darstellungs-oder Bildebene in Fig. 6 senkrechte Verlauf der jeweiligen Rotationsebenen (Linie L1 oder L2) mit der Erstreckungsrichtung der Traverse 9 (Linie LT) einen vorbestimmten Winkel α1 und α2 bilden. Der vorbestimmte Winkel α1 oder α2 ist fest eingestellt und nicht veränderlich, da bei der Anordnung gemäß Fig. 6 eine jeweilige Verstelleinrichtung zum Verstellen der einzelnen Windenergieanlagen 10 und 20 nicht vorgesehen ist.

Im Einzelnen wird der gemäß Fig. 6 feste vorbestimmte Winkel α1 und α2 auf einen entsprechenden optimalen Wert eingestellt, bei dem das Windenergieanlagensystem 1 in Verbindung mit verbesserten oder optimalen Strömungsverhältnissen betrieben werden kann. Die jeweiligen vorbestimmten Winkel α1 und α2 können unterschiedlich sein. Vorzugsweise sind sie jedoch gleich und können beispielsweise in einem Bereich von 0° bis 40°, und weiter vorzugsweise in einem Bereich von 0° bis etwa 10° eingestellt werden. Ungeachtet dieses fest eingestellten Winkels der Rotationsebenen der Windenergieanlagen 10 und 20 relativ zur Erstreckungsrichtung der Traverse 9 kann die gesamte Anordnung der Windenergieanlagen 10 und 20 und der zugehörigen Tragstruktur 5 mittels der Zentralverstelleinrichtung 4 weiter verstellt und damit an sich ändernde Windrichtungen angepasst werden. Es liegt damit eine gemeinsame Verstellung (d. h. ein Schwenken) der Windenergieanlagen 10 und 20 vor, die um eine gemeinsame Achse entlang einer Erstreckungsrichtung des Zentralturms 2 verläuft und eine Symmetrieachse der Tragstruktur sein kann.

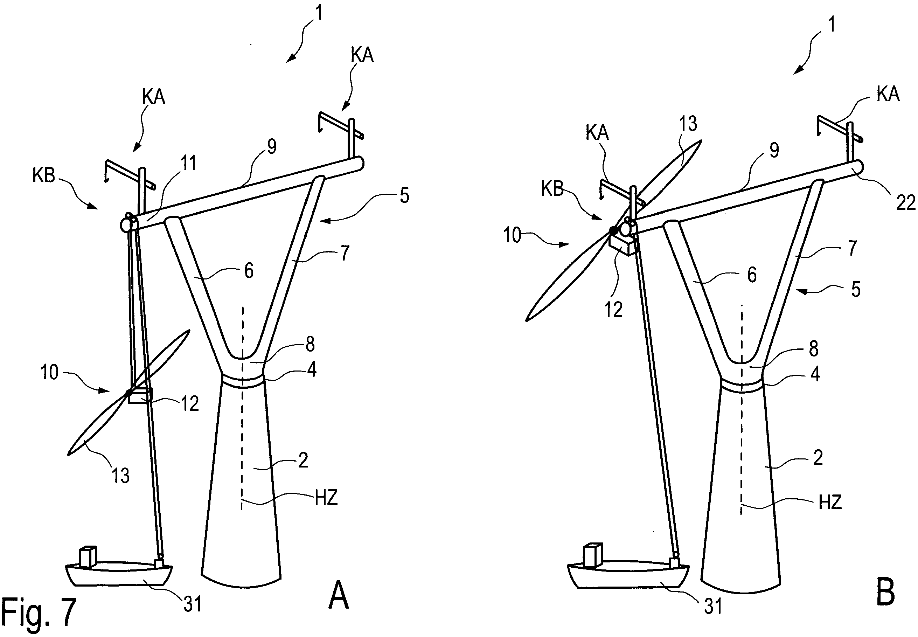

Fig. 7 (die Figuren 7A und 7B) zeigt die Möglichkeit, mittels entsprechender individueller Kranfunktionen die jeweilige Windenergieanlage 10 und 20 des Windenergieanlagensystems 1 anzuheben und an der Traverse 9 und speziell an den jeweiligen Endbereichen 11 und 21 zu montieren. Das Windenergieanlagensystem 1 umfasst im Bereich jeder einzelnen Windenergieanlage 10 und 20 hierzu zwei unterschiedliche sich in Art und Wirkungsweise ergänzende Kranfunktionen.

Bei dem jeweiligen ersten und zweiten Endbereich 11 und 21 der Traverse 9 befindet sich jeweils eine erste Kranfunktion KA mit den entsprechenden Einrichtungen, wobei die erste Kranfunktion KA eine Kranfunktion geringere Lasten darstellt, mittels der Teile des jeweiligen Maschinenhauses 12 und 22 angehoben werden können, des Weiteren Teile und Komponenten zur Bereitstellung der zweiten Kranfunktion KB. Mit Hilfe der ersten Kranfunktion KA können somit die Teile und Komponenten der zweiten Kranfunktion KB, die für große Lasten ausgelegt ist, zu dem jeweiligen ersten und zweiten Endbereich 11 und 21 angehoben und dort angeordnet bzw. befestigt werden.

Mit Hilfe der zweiten Kranfunktion KB kann dann beispielsweise die Turbine (mit großer Masse) zu einem bereits montierten Maschinenhaus angehoben und im Maschinenhaus montiert werden, oder kann die Turbine einschließlich des Maschinenhauses zu dem jeweiligen Endbereich 11 und 21 gebracht und dort befestigt werden. Die zweite Kranfunktion KB ist temporär an den Endbereichen 11 und 21 der Traverse 9 angeordnet, solange eine Montage oder Demontage der Windenergieanlage 10 oder 20 erforderlich ist und in diesem Zusammenhang ein Anheben oder Absenken der Turbine erforderlich ist.

Gemäß der Darstellung in Fig. 7 ist speziell in Fig. 7A ein Fahrzeug 31 veranschaulicht, das beispielsweise bei sogenannten Offshore-Anlagen in Form eines entsprechend ausgebildeten Schiffs und bei an Land zu montierenden Windenergieanlagensystemen durch ein entsprechend ausgebildetes Kraftfahrzeug vorgesehen ist. Es wird gemäß Fig. 7A die Turbine oder die Turbine einschließlich des Maschinenhauses unterhalb des jeweiligen ersten oder zweiten Endbereichs 11 oder 21 der Traverse 9 platziert, und mittels entsprechender Seile und Winden angehoben, die in Verbindung mit der ersten Kranfunktion KA montiert wurden. Nach dem Anheben und der durchgeführten Montage gemäß der Darstellung in Fig. 7B können mittels der ersten Kranfunktion KA die entsprechenden Bauteile der zweiten Kranfunktion KB entfernt werden, und es können nach Umfahren des Zentralturms 2 durch das Fahrzeug 31 mittels der ersten Kranfunktion KA die Bauteile am gegenüberliegenden Endbereich 11 oder 21 der Traverse 9 angeordnet werden, wobei der Montagevorgang (die erforderliche Montagesequenz) für die zweite Windenergieanlage 20 die gleiche ist wie bei der ersten Windenergieanlage 10.

Die erste Kranfunktion KA wird verkörpert durch einen internen Kran bei den Endbereichen 11 und 21 der Traverse 9, mit dem Teile geringeren Gewichts angehoben werden können. Die zweite Kranfunktion KB, die für große Belastung von beispielsweise 150 t bis 200 t (bei Windenergieanlagen mit großer Leistung) ausgelegt ist, ist in Form von Seilwinden und entsprechenden Seilen in Verbindung mit dem Fahrzeug unterhalb der entsprechenden Montageposition an der Tragstruktur temporär vorgesehen. Es ist dies schematisch und vereinfacht in den Figuren 7A und 7B gezeigt.

Nach beendeter Montage beider Windenergieanlagen 10 und 20 oder nach dem Abschluss erforderlicher Wartungsarbeiten mit einem Absenken und Anheben der Turbine der Windenergieanlagen 10 und 20 von und zur Tragstruktur 5 verbleibt die erste Kranfunktion KA auf der Traverse 9 benachbart zu den jeweiligen Windenergieanlagen 10 und 20, während die Teile der zweiten Kranfunktion KB entfernt werden. Die Windenergieanlagen 10 und 20 sind nach Fertigstellung der weiteren mechanischen und elektrischen Anschlüsse betriebsbereit.

Die Montagesequenz ist bei beiden Windenergieanlagen 10 und 20 gleich, und ist allenfalls unterschiedlich, wenn die jeweilige Windenergieanlage 10 und 20 oberhalb oder unterhalb des ersten und zweiten Endbereichs 11 und 21 angeordnet wird (Figuren 4 und 5). Es gilt die erforderliche und vorstehend beschriebene Montagesequenz auch für die Anordnung des Windenergieanlagensystems 1 gemäß Fig. 6, bei der die Windenergieanlagen 10 und 20 ortsfest in den jeweiligen Endbereichen 11 und 21 der Traverse 9 befestigt werden. Es sind auch hier die auf der Traverse 9 verbleibende erste Kranfunktion KA und die temporär auf der Traverse angeordnete zweite Kranfunktion KB vorgesehen.

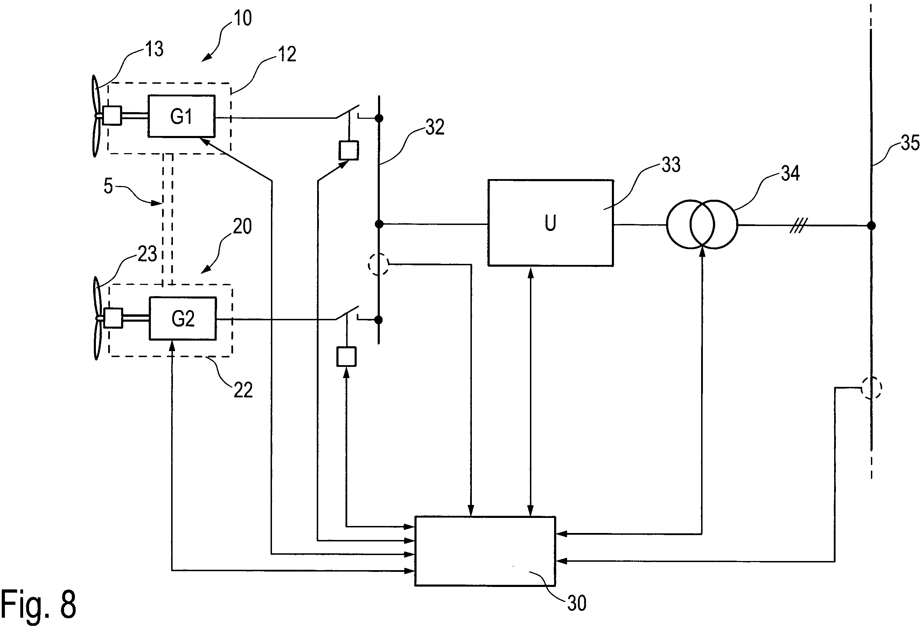

Fig. 8 zeigt in schematischer und vereinfachter Form ein Blockschaltbild der elektrischen Verbindungen zum Betreiben der Windenergieanlagen 10 und 20 an einem Leistungsversorgungsnetz in Verbindung mit einem gemeinsamen Umrichter und Transformator.

Die erste Windenergieanlage 10 und die zweite Windenergieanlage 20 umfassen jeweils neben weiteren Komponenten einen Generator. Ein erster Generator G1 ist Teil der ersten Windenergieanlage 10, und ein zweiter Generator G2 ist Teil der zweiten Windenergieanlage 20. Die jeweiligen Generatoren G1 und G2 sind mit einer gemeinsamen Sammelschiene 32 verbunden, die selbst mit einem gemeinsamen Umrichter 33 verbunden ist. Der Umrichter 33 speist einen entsprechenden Transformator 34, der die elektrische Leistung in Verbindung mit einer vorbestimmten Spannung in ein Netz 35 einspeist. Das Netz 35 stellt ein allgemeines Leistungsversorgungsnetz dar.

Mit den verschiedenen Komponenten des in Fig. 8 gezeigten Blockschaltbilds ist die Steuerungseinrichtung 30 verbunden, die neben entsprechenden Steuerungsmaßnahmen die Überwachung der Einrichtungen und das Zusammenwirken steuert. In diesem Zusammenhang erhält die Steuerungseinrichtung 30 über eine umfangreiche (nicht gezeigte) Sensorik die entsprechende Information hinsichtlich der Betriebszustände der einzelnen Komponenten sowie auch der jeweiligen Verstellpositionen (Istposition) in Verbindung mit der Zentralverstelleinrichtung 4 und den individuellen Verstelleinrichtungen 16 und 26. Speziell können durch die Steuerungseinrichtung 30 die beiden Windenergieanlagen 10 und 20 in der Weise gesteuert werden, dass ein Hochfahren der jeweiligen Windenergieanlagen 10 und 20 und das Vorbereiten zum Anschalten an das Netz 35 gewährleistet sind, sowie im Betrieb die erforderlichen Maßnahmen ergriffen werden können.

Es können ferner die von den einzelnen Windenergieanlagen 10 und 20 abgegebenen Leistungen erfasst werden, so dass auf der Basis dieser Daten eine Steuerung der Verstellwinkel (gemeinsamer Verstellwinkel oder individuelle Verstellwinkel) durchgeführt werden kann. Die Windenergieanlagen 10 und 20 können individuell auf unterschiedliche oder (ungeachtet unvermeidbarer Toleranzen) gleiche Verstellwinkel mittels der jeweiligen ersten und zweiten Verstelleinrichtung 16 und 26 eingestellt werden. Dies kann ergänzt werden durch eine gemeinsame und damit für beide Windenergieanlagen gleiche Verstellung (Schwenken) mittels der Zentralverstelleinrichtung 4. Es kann auch lediglich das Windenergieanlagensystem 1 mittels der Zentralverstelleinrichtung 4 verstellt werden, wenn eine individuelle Verstellung nicht geboten ist. Mittels der ersten und zweiten Verstelleinrichtung 16 und 26 ist im Allgemeinen eine raschere Verstellung möglich. Jede Verstelleinrichtung 4, 16 und 26 umfasst die entsprechende Sensorik zum Rückmelden der tatsächlichen Verstellposition der Tragstruktur 5 und der individuellen Verstellpositionen der Windenergieanlagen 10 und 20 zur Steuerungseinrichtung 30.

Speziell kann somit eine Verstellung oder Einstellung des Windenergieanlagensystems 1 an eine sich verändernde Windrichtung W entweder mittels der Zentralverstelleinrichtung 4 oder mit den individuellen Verstelleinrichtungen 16 und 26 erfolgen, oder es kann eine Anpassung an die Windrichtung W oder an weitere Betriebsbedingungen bedarfsweise mittels der Zentralverstelleinrichtung 4 und den individuellen Verstelleinrichtungen 16 und 26 erfolgen. Eine derartige Verstellung kann jederzeit während des Betriebs des Windenergieanlagensystems 1 oder auch in Betriebspausen vorgenommen werden.

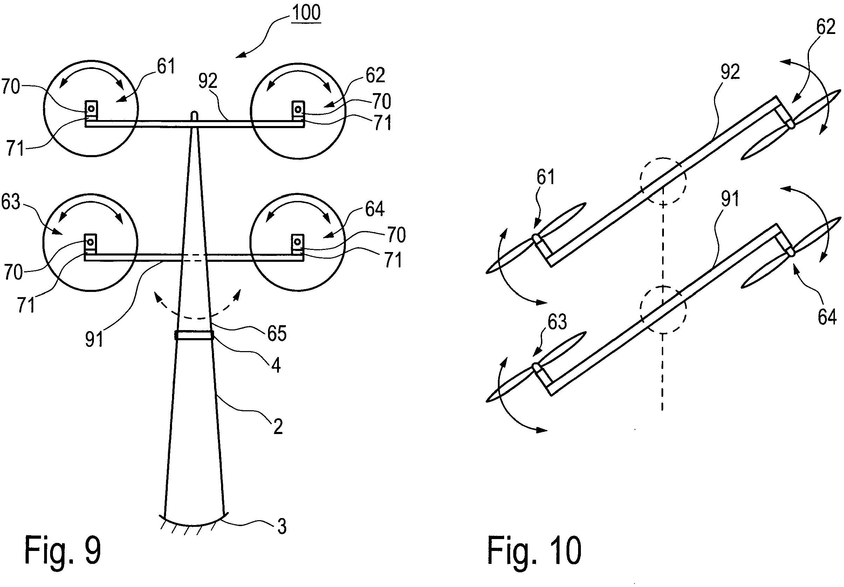

Die Figuren 9 und 10 zeigen eine Abwandlung der Anordnung des Windenergieanlagensystems 1 des Ausführungsbeispiels, wobei das Windenergieanlagensystem 100 mehr als zwei Windenergieanlagen aufweist. Die schematische und vereinfachte Darstellung in Fig. 9 zeigt entsprechend einer Frontansicht die Anordnung von beispielsweise vier Windenergieanlagen 61, 62, 63 und 64 des Windenergieanlagensystems 100, die auf einer ersten und einer zweiten Traverse 91 und 92 angeordnet sind. Jede Windenergieanlage 61 bis 64 umfasst ein Maschinenhaus 70 sowie eine Verstelleinrichtung 72, die zwischen dem Maschinenhaus 70 und dem jeweiligen Windenergieanlagensystem 100 äußeren Ende der ersten oder zweiten Traverse 91 und 92 angeordnet ist. Die einzelnen Windenergieanlagen 61 bis 64 können gleich oder unterschiedlich ausgeführt sein. Mittels der Verstelleinrichtungen 71 kann jede Windenergieanlage 61 bis 64 individuell und unabhängig von den anderen Windenergieanlagen hinsichtlich Ihres Azimutwinkels verstellt werden. In gleicher Weise wie bei dem Ausführungsbeispiel sind sämtliche Windenergieanlagen 61 bis 64 gemeinsam durch die Zentralverstelleinrichtung 4 verstellbar, die zwischen dem Zentralturm 2 und der Tragstruktur 65 angeordnet ist. Der Zentralturm ist auf dem Sockelbereich 3 an Land oder bei einer Offshore-Anlage im Küstenbereich des Meeres angeordnet.

Fig. 10 zeigt schematisch und vereinfacht in einer Draufsicht die Windenergieanlagen 61 bis 64 gemäß Fig. 9 mit ihren individuellen Verstellmöglichkeiten (individuelles Mikro-Yawing). Zur Vereinfachung der Darstellung hierzu sind die gemäß Fig. 9 übereinander angeordneten Traversen 91 und 92 mit den Windenergieanlagen 61 bis 64 nebeneinander gezeigt.

In Fig. 9 sind die Maschinenhäuser 70 der Windenergieanlagen 61 bis 64 oberhalb des äußeren Endes der jeweiligen ersten oder zweiten Traverse 91 und 92 angeordnet. Dazwischen befindet sich die zugehörige Verstelleinrichtung 71. Die vorliegende Erfindung ist jedoch hierauf nicht beschränkt, vielmehr können die Maschinenhäuser 70 der Windenergieanlagen 61 bis 64 auch unterhalb der äußeren Enden der Traversen 91 und 92 angeordnet werden. Auch können die Windenergieanlagen 61 bis 64 teilweise oberhalb und teilweise unterhalb des Endes der jeweiligen Traverse 91 und 92 angeordnet werden. Die einzelnen Windenergieanlagen können gemäß Fig. 9 als Luv-und Lee-Läufer ausgebildet werden, wobei auch von der Darstellung in Fig. 10 abweichende Anordnungen von Luv- und Lee-Läufern vorgesehen sein können.

Fig. 9 zeigt die beiden Traversen 91 und 92 an der Tragstruktur 65 übereinander in einem Abstand entsprechend dem Rotordurchmesser der Windenergieanlagen 61 bis 64. Es können auch die Traversen 91 und 92 an einer Y-förmigen Tragstruktur 5 gemäß der Darstellung in beispielsweise Fig. 1 übereinander angeordnet werden.

Ungeachtet der vereinfachten und schematischen Darstellung des Ausführungsbeispiels und der Abwandlung desselben in den Figuren umfasst jede der vorstehend beschriebenen Windenergieanlage 10, 20 und 61 bis 64 eine weitere Verstellmöglichkeit, mit der die Rotationsachse der Rotoren im allgemeinen um einen kleinen Winkel (vorzugsweise nach oben) verstellt bzw. gekippt werden kann, um in gewissem Umfang eine Leistungseinstellung zu erreichen und das System vor einer Überlast zu schützen. Drehgelenke und Betätigungseinrichtungen sind hierzu in den Figuren nicht gezeigt. Diese weitere Verstelleinrichtung ist ferner unabhängig von den vorstehend beschriebenen Verstelleinrichtungen 4, 16 und 26.

Die vorliegende Erfindung wurde anhand von Ausführungsbeispielen und Abwandlungen unter Bezugnahme auf die Zeichnung näher beschrieben. Es ist jedoch für den auf diesem Gebiet tätigen Fachmann selbstverständlich, dass die Ausgestaltung der vorliegenden Erfindung gemäß den vorstehend beschriebenen Figuren und die für die jeweiligen Bauteile und Komponenten verwendeten Bezugszeichen in den Figuren und der Beschreibung sowie die beispielhaften Angaben nicht einschränkend auszulegen sind. Die Erfindung ist auf die angegebenen Darstellungen in den Figuren und insbesondere auf Dimensionen und Anordnungen nicht beschränkt. Als zur Erfindung gehörig werden sämtliche Ausführungsformen und Varianten gesehen, die unter die beigefügten Patentansprüche fallen.

## Patentansprüche

1. Windenergieanlagensystem mit auf einer gemeinsamen Tragstruktur angeordneten Windenergieanlagen zur Umwandlung von Windenergie in elektrische Energie, mit
einem Zentralturm (2) und einem ersten und zweiten Tragast (6, 7) sowie einer Traverse (9), die an dem äußeren Ende der Tragäste (6, 7) angeordnet ist und diese verbindet,
einer ersten Windenergieanlage (10), die an einem ersten Endbereich (11) der Traverse (9) mittels einer ersten Verstelleinrichtung (16) drehbar angeordnet ist,
einer zweiten Windenergieanlage (20), die an einem zweiten Endbereich (21) der Traverse (9) mittels einer zweiten Verstelleinrichtung (26) drehbar angeordnet ist, und wobei die erste und die zweite Verstelleinrichtung (16, 26) ausgebildet sind zum Schwenken einer jeweiligen Rotationsachse (15, 25) von Rotoren (13, 23) der Windenergieanlagen (10, 20) in einer Ebene senkrecht zu einer jeweiligen Rotationsebene (14, 24) der Rotoren (13, 23), und
einer Steuerungseinrichtung (30) zur Ansteuerung der Verstelleinrichtungen (16, 26) zur individuellen Änderung und Einstellung der Schwenkposition jeder Windenergieanlage (10, 20), wobei ein vorbestimmter Winkel (α1, α2) zwischen den Rotationsebenen (14, 24) der Rotoren (13, 23) der Windenergieanlagen (10, 20) und einer Erstreckungsrichtung (LT) der Traverse (9) etwa 0° bis 40° beträgt.

2. System nach Anspruch 1, wobei der erste und zweite Tragast (6, 7) an seinem jeweiligen unteren Ende durch einen Verbindungsbereich (8) miteinander verbunden sind, und der Verbindungsbereich (8) mittels einer Zentralverstelleinrichtung (4) mit dem Zentralturm (2) drehbar verbunden ist.

3. System nach Anspruch 1, wobei eine der ersten und zweiten Windenergieanlagen (10, 20) vor und die andere Windenergieanlage hinter der Tragstruktur (5) relativ zu einer Windrichtung (W) angeordnet ist.

4. System nach Anspruch 1, wobei die erste und zweite Windenergieanlage (10, 20) oberhalb oder unterhalb des jeweiligen Endbereichs (11, 21) der Traverse (5) angeordnet sind, und die jeweilige erste und zweite Verstelleinrichtung (16, 26) zwischen der Windenergieanlage (10, 20) und dem jeweiligen Endbereich (16, 26) zum Tragen der Windenergieanlagen angeordnet sind.

5. System nach Anspruch 1, wobei der vorbestimmte Winkel (α1, α2) für beide Windenergieanlagen (10, 20) unterschiedlich oder vorzugsweise gleich ist.

6. System nach Anspruch 2, wobei die Zentralverstelleinrichtung (4) zwischen dem Zentralturm (2) und einem Verbindungsbereich (8) des ersten und zweiten Tragastes (6, 7) ausgebildet ist zur Verstellung einer Raumlage der Tragstruktur (5) relativ zum Zentralturm und zur Anpassung des Windenergieanlagensystems (1) an die Windrichtung (W) nach dem Einstellen der Schwenkposition der Rotationsachsen (15, 25) der jeweiligen Windenergieanlage (10, 20).

7. System nach einem der Ansprüche 1 bis 6, wobei die erste und zweite Verstelleinrichtung (16, 26) ausgebildet ist, nach einer Einstellung eines ersten vorbestimmten Winkels (α1, α2) der Rotationsachsen (15, 25) der Rotoren (13, 23) der jeweiligen Windenergieanlage (10, 20) die Rotationsachsen unterschiedlich oder gleichartig um weitere vorbestimmte kleine Winkel in beiden Richtungen ausgehend von dem ersten vorbestimmten Winkel zu verstellen.
